# EUROPÄISCHE PATENTSCHRIFT

(11) **EP 3 188 685 B1**
(45) Veröffentlichungstag und Bekanntmachung des Hinweises auf die Patenterteilung: **10.10.2018**
(21) Anmeldenummer: 15760425.7
(22) Anmeldetag: 28.08.2015
(51) Int. Cl.: A61C 7/14, A61C 7/00

(54) **VERFAHREN ZUR HERSTELLUNG EINES POSITIONIERUNGSTRAYS UND DIE VORRICHTUNG DAZU**
METHOD FOR PRODUCING A POSITIONING TRAY AND THE DEVICE THEREFOR
PROCÉDÉ DE FABRICATION D'UNE GOUTTIÈRE DE POSITIONNEMENT ET DISPOSITIF ASSOCIÉ

(30) Priorität: 02.09.2014 DE 102014217480
(43) Veröffentlichungstag der Anmeldung: 12.07.2017
(73) Patentinhaber: Freimüller, Andreas, 13465 Berlin-Frohnau (DE)
(72) Erfinder: Freimüller, Andreas, 13465 Berlin-Frohnau (DE)
(74) Vertreter: Hoffmann Eitle
(86) Internationale Anmeldenummer: PCT/EP2015/069747
(87) Internationale Veröffentlichungsnummer: WO 2016/034509

(56) Entgegenhaltungen:
- DE-A1-102009 008 384
- US-A1- 2005 244 790
- US-A1- 2010 279 243
- US-A1- 2013 122 443

## Beschreibung

### Technisches Gebiet

Die vorliegende Erfindung betrifft ein Verfahren zur Herstellung eines Positionierungstrays bestehend aus individuellen Brackets in körperlicher direkter Verbindung mit einer Positionierungshilfe, eine Vorrichtung, die für ein solches Verfahren geeignet ist, und entsprechend hergestellte im Folgenden bezeichnete Positionierungstrays.

### Stand der Technik

Zahnspangen sind Mittel, um eine Zahnfehlstellung zu korrigieren. Hierzu können sogenannte "Brackets" fest mit den entsprechenden Zähnen eines Kiefers des Patienten verbunden werden. Die industriell und standardisiert hergestellten Brackets bestanden in der Vergangenheit typischerweise aus Metall, Keramik oder Kunststoff. Die Brackets weisen an derjenigen Seite, die vom Zahn abgewandt ist (Bracketkörper), eine typischerweise schlitzförmige Ausformung auf. Dieser Schlitz dient dazu, einen runden oder vierkantigen "Bogen" in die Brackets einzusetzen. Bei einem Bogen handelt es sich um ein dünnes, in einer standardisierten oder individuellen Zahnbogenform hergestelltes Stück Metall, der durch seine Form/ Bogendimension, wenn es zur Aufnahme in dem Bracketschlitz kommt, entsprechend der Position des Bracketschlitzes und der Materialbeschaffenheit des Bogens auf dieses Bracket eine Kraft in einer bestimmten definierten Richtung ausübt. Diese Kraft wird auf die Zähne übertragen und bewegt diese idealerweise in die vom Behandler geplante Richtung, wodurch eine Korrektur der Zahnfehlstellung erfolgt. Typischerweise reicht für eine vollständige Behandlung einer Zahnfehlstellung ein einziger Bogen nicht aus, so dass mehrere Bögen in verschiedenen Querschnitten und aus verschiedenen Metalllegierungen nacheinander eingesetzt werden müssen. Dies führt im Normalfall zu einer bestimmten Behandlungsdauer (ca. 1-3 Jahre) von einigen Jahren, während denen die Brackets an den Zähnen verbleiben. Diese werden erst nach dem Ende der Behandlung, d. h. wenn die Zahnfehlstellung ausreichend korrigiert wurde, entfernt.

Aus dem oben Genannten ist ersichtlich, dass die Positionierung und auch die Auswahl der Art von Brackets bzw. des Bracketsystems und die Auswahl der Bogenform/ Dimension an den Patienten, insbesondere an dessen Zahnform bzw. -größe und auch an seine individuelle Zahnbogendimension angepasst werden muss. D. h. es ist nötig, durch eine Analyse des Ausgangsbefundes/ Zahnbogenform bzw. -größe/ Grad der Zahnfehlstellung/ und der Planung des konkreten Behandlungszieles die möglichst "idealen" Brackets und Bögen aus dem zurzeit existierenden Angebot industriell hergestellter und patentierter Bracketsysteme und Bogenarten für den einzelnen Patienten individuell auszuwählen.

Für den Erfolg der Behandlung ist in der weiteren Folge dann die genaue Positionierung der Brackets bezüglich jedes einzelnen Zahnes von äußerster Wichtigkeit. So hat die Bracketbasis typischerweise eine Fläche von nur wenigen Quadratmillimetern, und auch der Bracketschlitz für die Aufnahme des Bogens weist normalerweise eine Breite von weniger als 1mm auf. Das heißt wenn die Brackets auch nur geringfügig falsch positioniert sind, ist es nicht mehr möglich die Zahnfehlstellungskorrektur exakt wie geplant umzusetzen. Dies würde dazu führen, dass entweder sofort oder zu einem späteren Zeitpunkt das entsprechende Bracket entfernt und neu gesetzt werden müsste oder der Bogen mit Extrabiegungen in bis zu 3 Ebenen individualisiert werden müsste, was für den Patienten zu Unannehmlichkeiten, zumindest jedoch zu einer Verlängerung der Behandlungszeit führen würde.

Um entsprechend für eine leichte Positionierung der Brackets zu sorgen, werden, wie dies zum Beispiel in der EP 2 614 791 A1 beschrieben wird, sogenannte Positionierungstrays verwendet.

Dieses Dokument beschreibt ein "Bracket" mit einer Positionierungshilfe und eine Übertragungsmaske, sowie ein Verfahren zu deren Herstellung. Das "Bracket" wird zunächst mit Hilfe eines digitalen Modells des Kiefers des Patienten modelliert. Anschließend wird eine Wachsform des "Brackets" mit Hilfe eines 3D-Druckverfahrens erstellt. Mit Hilfe der Wachsform wird dann das "Bracket" aus einer Titanlegierung erstellt. Das so hergestellte "Bracket" wird dann an einen originalen Zahnabdruck angepasst, die Übertragungsmaske erstellt und die Positionierungshilfe entfernt.

Dieses Positionierungstray/ Schiene wird dann, nach erfolgtem Auffüllen mit dem entsprechenden Kunststoff, auf einen entsprechenden Zahn oder den gesamten Zahnbogen eines Patientenkiefers aufgesetzt. Das über den Brackets geformte Positionierungstray führt dazu, dass das Bracket automatisch an der "richtigen" Position bezüglich des Zahns positioniert werden kann, so dass dieses nunmehr z. B. mit Klebstoff an dem Zahn befestigt werden kann. Nach diesem Befestigen kann das Positionierungstray/ Schiene entfernt werden, und es verbleiben somit alleine das Bracket am Zahn oder die Brackets an den Zähnen eines gesamten Kiefers.
Die US 2013/122443 A1 offenbart Merkmale, die unter den Oberbegriff von Ansprüchen 1 und 5 fallen.

### Darstellung der Erfindung

Dem Erfinder ist aufgefallen, dass alle bisherigen Verfahren durch die Trennung der Verfahren zur Herstellung bzw. Positionierung von individuellen bzw. standardisierten Brackets und der Verfahren zur Herstellung von entsprechenden Positionierungs- bzw. Übertragungstrays nach dem Stand der Technik sehr zeit- und kostenintensiv sind.

Bisher existiert kein Verfahren zur Herstellung eines im ff. bezeichneten "Übertragungstrays", in dem die Brackets in direktem einzeitigen "workflow" - in körperlicher Verbindung mit der notwendigen und im ff. bezeichneten "Übertragungshilfe" in einem einzeitigen Herstellungsprozess - beschrieben wird.

Ausgehend von der EP 2 614 791 A1 muss stets eine Hohlform/ Übertragungsschiene hergestellt werden, in der das/ die eigentliche/n Bracket/s mittels flüssigem lichthärtenden Kunststoff hergestellt bzw. gleichzeitig übertragen werden kann/können, oder mit Hilfe derer nun ein vorher individuell gefertigtes oder industriell bereits hergestelltes Bracket auf dem/ den Zahn/ Zähnen positioniert werden kann/ können. Die Erfahrung mit dem indirekten Kleben von Brackets mittels bisher in Tiefziehtechnik hergestellten Positionierungsschienen/ -trays hat jedoch unter anwendenden Zahnärzten und Kieferorthopäden Nachteile/ Risiken offenbart. Bei der häufig etwas problematischen bzw. risikoreichen Abnahme der Schienen - bedingt durch die unter Umständen erhöhte Retention der Brackets in der Schiene infolge der vorhandenen Unterschnitte zwischen Bracketkörper und Bracketbasis - kann es sofort nach dem Kleben der Brackets häufiger zum Ablösen einzelner Brackets kommen.

Häufig befinden sich auch überschüssige Klebereste an den Rändern der Bracketbasen. Dies macht ein zeitintensives und für den Patienten unangenehmes Nacharbeiten mit rotierenden Hartmetallfinieren in der Bracketumgebung notwendig.

Die US 2014/0141383 A1, US 2013/0122445 A1, EP 2 724 685 A und KR 2014/063510 A beschreiben weitere Zahnspangen bzw. Herstellungsverfahren dazu aus dem Stand der Technik.

Die Erfindung wurde in Anbetracht dieser Probleme mit dem Stand der Technik vorgenommen. Die Erfindung löst diese Probleme durch das Verfahren zur Herstellung eines Positionierungstrays nach Anspruch 1, durch die Vorrichtung nach Anspruch 5, und durch das computerlesbare Speichermedium nach Anspruch 9. Bevorzugte Ausführungsformen sind in den abhängigen Ansprüchen beschrieben.

Anspruch 1 definiert ein Verfahren zur Herstellung eines Positionierungstrays für individuelle Brackets inklusive damit direkt körperlich verbundener Positionierungshilfe/n für einen gesamten Zahnbogen, ein Zahnbogensegment oder einzelner Zähne. Diese Positionierungstrays weisen eine Positionierungshilfe und ein oder mehrere zugehörige Brackets auf. Das heißt bei einem solchen Positionierungstray kann es sich sowohl um ein Positionierungstray, das lediglich ein Bracket für einen einzigen Zahn aufweist, als auch um ein Positionierungstray für mehrere Zähne handeln, welches mehrere Brackets aufweist, die jeweils an verschiedenen Zähnen angebracht werden können. Hierbei kann das Positionierungstray sowohl dafür geeignet sein, Brackets an der zungenabgewandten Seite als auch an der zungenzugewandten Seite der Zähne anzubringen. Vor allem Letzteres ist für viele Patienten vorteilhaft, da hierdurch nicht das optische Erscheinungsbild des Gebisses beeinträchtigt wird.

Bei der Positionierungshilfe handelt es sich typischerweise um ein über die Schneidekanten oder die Okklusalflächen der Zähne virtuell aufmodelliertes Element. Das oder die Bracket/s sind typischerweise mit der Positionierungshilfe verbunden und einstückig mit dieser ausgebildet. Die Brackets sind so ausgebildet, dass sie an derjenigen Seite, an der sie an dem Zahn zu befestigen sind, freiliegen, so dass sie an dem Zahn z. B. durch einen Klebstoff befestigt werden können.

Gemäß der vorliegenden Erfindung wird die Positionierungshilfe bevorzugt einstückig mit dem zugehörigen Bracket/ den zugehörigen Brackets ausgebildet. Das heißt es handelt sich nicht um separate Objekte, sondern um Teile eines einzigen zusammenhängenden Positionierungstrays. Jedoch bedeutet in der vorliegenden Anmeldung "einstückig" auch, dass die beiden Teile verschiedene Zusammensetzungen aufweisen können, solange diese nur als ein Stück gefertigt werden.

Das Verfahren weist als ersten Schritt auf, dass Ausgangsdaten der Geometrie eines oder mehrerer Zähne - auch inklusive des umliegenden Weich- und optional auch Hartgewebes eines Zahnbogens - eines oder beider Kiefer eines Patienten erfasst werden. Eine solche Erfassung kann z. B. mit einem intraoralen 3D-Scan des Gebisses/ der Kiefer erfolgen. Es wäre jedoch auch möglich, dass zunächst ein Abdruck des Gebisses eines Patienten vorgenommen wird, der dann entsprechend in 3D-Daten umgewandelt wird. Es kann sich aber auch um das Einlesen bereits gespeicherter Daten handeln, das heißt die Daten müssen nicht erst separat erzeugt werden. Vorrichtungen, mit der solche intraoralen Daten erfasst werden können, sind im Dentalfachhandel bereits ausreichend verfügbar.

Unter dem Wort "Geometrie" verstehen wir hierbei die Form, Position und Ausrichtung der Zähne inklusive des angrenzenden Weichgewebes bzw., bei vorhandenen 3D-Daten aus Röntgenaufnahmen, des den Zahn umgebenden Knochens. Anders gesagt bezeichnet das Wort "Geometrie" diejenige Form, welche die Außenform der Zähne und des zahnumgebenen Gewebes des Patienten beschreibt.

### 1. virtueller Planungsschritt:

Als nächster bzw. "1. virtueller Planungsschritt" müssen mittels entsprechend notwendiger Software die Zieldaten geplant/ definiert werden. Bei den Zieldaten handelt es sich um Daten, welche die nach einer Zahnspangenbehandlung zu erzielende Geometrie des zu behandelnden Kiefers eines Patienten beschreiben. Solche Zieldaten können bereits heute, mit Hilfe geeigneter Software (z. B. OnyxCeph™ der Firma Image Instruments GmbH oder anderer Anbieter), erzeugt werden. Während es sich bei den Ausgangsdaten um den "Ist-Zustand" handelt, beschreiben die Zieldaten die zu erzielende Geometrie der Zahnbögen, d. h. den "Soll-Zustand".

### 2. virtueller Planungsschritt:

Ausgehend hiervon wird für die virtuell zu planende Traykonfiguration zunächst nur die Bracketposition geplant, wobei zunächst nur ein Teil der Traykonfigurationsdaten erhalten werden. Hierbei handelt es sich zunächst um die Daten, die beschreiben, welche Idealposition die Bracketkörper in Bezug zur lingualen oder vestibulären Zahnoberfläche einnehmen müssen, um einen vorher notwendigerweise bereits ausgewählten und zum Zahnbogen passenden und nach bestimmten Kriterien positionierten "Idealbogen" aus einer in die Software eingepflegten "virtuellen Bogenbibliothek" (dazu können alle existierenden lingualen und vestibulären Bogenformen und Dimensionen aller Hersteller in ihrer Dimension exakt 1:1 erfasst und in der Software verfügbar bereitgestellt werden) aufzunehmen. Mit Hilfe dieser Software wird es möglich sein, den "passenden" Bogen zu der erstellten Zahnbogenzielkonfiguration in diesem 2. virtuellen Planungsschritt zu wählen. Dies dient dazu, dass die Bracketkörper bzw. die Bracketbasis einerseits so dicht an der Zahnoberfläche bzw. so flach wie möglich gestaltet werden können, um den maximalen Tragekomfort für die Patienten garantieren zu können. Andererseits ist bei der Erstellung der Software auch ein Mindestabstand des Bogens von der Zahnoberfläche zu definieren, um die Funktionsfähigkeit des Brackets in all seinen Bestandteilen gewährleisten zu können. Dies ist notwendig, um eine Zahnspangenbehandlung durchzuführen, die die Zähne von der Ausgangsgeometrie zur zu erzielenden Idealbogengeometrie hin bewegt.

### 3. virtueller Planungsschritt

Das heißt, es werden entsprechend der Position des virtuell gewählten und positionierten Zielbogens die Mesial-/ Distalposition der einzelnen Brackets entsprechend den einzelnen Zahnbreiten und die Größe/ Form der Bracketkörper und -basen mittels Software nun im 3. virtuellen Planungsschritt bestimmt.
Dabei müssen in der Software Stammdaten bestimmter Grundformen von Bracketkörpern und Bracketbasen eingepflegt sein. Die in der Software zu definierende Standardschlitztiefe in dem Bracketkörper und die einzustellende Standardhöhe der Bracketbasen sind dabei nachträglich, entsprechend der Situation zwischen Bogen und Zahnoberfläche, mittels geeigneter Software optimierbar.

### 4. virtueller Planungsschritt

Nach diesem 3. virtuellen Planungsschritt wird anschließend für jeden Zahn in einem 4. virtuellen Planungsschritt die Positionierung der Positionierungshilfe bezüglich der Brackets beschrieben. Dazu muss das im ersten virtuellen Planungsschritt erstellte Zielsetup nunmehr durch die Software wieder in den Ausgangs- bzw. Istzustand zurückgeführt werden. Dabei werden gleichzeitig mit den Zähnen die virtuell positionierten Brackets in die Ausgangsposition gebracht.

Anschließend wird eine oder in mehrere Abschnitte unterteilte inzisale bzw. okklusale Positionierungshilfe virtuell geplant, die anschließend virtuell mittels standardisierter Verbindungselemente mit dem oder den Brackets oder den Verbindungselementen zwischen den Brackets direkt verbunden werden und die dafür sorgt, dass die Brackets bezüglich der Zähne durch die Positionierungshilfe in der Ausgangsposition passend und sicher positioniert werden können. Das heißt die Positionierungshilfe stellt sicher, dass die Brackets an der richtigen Position bezüglich der Zähne in der Ausgangsposition positioniert werden. Wenn nunmehr diejenige Seite entsprechend hergestellter und positionierter Brackets, die an den Zähnen anliegt, mit einem Klebstoff versehen wird und dieser aushärtet, werden die Brackets automatisch an der richtigen Position bezüglich der Zähne befestigt. Die Positionierungshilfe kann dann durch Separieren von den Brackets wieder leicht entfernt werden, was die an den Zahn angeklebten Brackets an dem Zahn belässt. Diese können dann, wie bezüglich des Standes der Technik beschrieben, mit einem Bogen der vorher als Planungsgrundlage ausgewählten Idealbogendimension zur Durchführung einer Zahnspangenbehandlung verwendet werden. Aufgrund der Abfolge verschiedener Bogenstärken bzw. Bogenquerschnitten und Bogenmaterialbeschaffenheiten in der entsprechend gewählten Idealbogendimension eines ausgewählten Herstellers (aus der in der Software befindlichen Bogenbibliothek) kann sich somit Step by Step die Ausformung des Zahnbogens in die definierte Zielposition 1:1 umsetzen.

Aufgrund der entsprechend generierten Daten werden nach erfolgtem 4. virtuellen Planungsschritt entsprechende Positionierungstrays durch ein generatives oder abtragendes Fertigungsverfahren hergestellt. Das heißt diese Brackets in einstückiger Verbindung mit der Positionierungshilfe (=Positionierungstray) werden sofort positiv hergestellt. Es wird somit keine Negativ-Form hergestellt, in die ein entsprechendes flüssiges Bracketmaterial eingegossen werden müsste oder die lediglich zur körperlichen Aufnahme/Positionierung von Brackets geeignet sind.

Hierbei verstehen wir unter einem generativen Fertigungsverfahren ein Verfahren, bei dem das Material, aus dem die Brackets bestehen sollen, direkt aufgebracht wird, es wird also keine Negativform hergestellt, sondern sofort eine Positivform erzeugt. Ein Beispiel eines solchen Verfahrens ist ein 3D-Druckverfahren. Andere Verfahren sind aber auch Stereolithographie, selektives Laserschmelzen, selektives Lasersintern, "Fused Deposition Modeling", "Laminated Object Modeling" und Kaltgasspritzen. Ein anderer Begriff, der als Oberbegriff für diese Verfahren verwendet wird, ist "Rapid Prototyping".

Bei einem generativen Fertigungsverfahren können als Material z. B. diejenigen Kunststoffe für das Herstellen der Positionierungstrays verwendet werden, die sich bereits auch zum Herstellen von Attachments/ Kunststoffbrackets bewährt haben. Als Beispiele seien der Transbond™ XT lichthärtende Kunststoff von 3M Unitek oder Empress EnamelPlus HRI von Ivoclar/ Vivadent genannt. Des Weiteren können natürlich auch alle diejenigen Materialien verwendet werden, die in der Zahnmedizin für das Herstellen von großflächigen Zahnfüllungen aus Kunststoff verwendet werden und die z. B. mittels UV-Licht ausgehärtet werden können.

Unter einem abtragenden Fertigungsverfahren werden alle Fertigungsverfahren verstanden, bei denen das herzustellende Objekt aus einem Rohling hergestellt werden kann. So könnte ein entsprechendes Verfahren z. B. ein computergesteuertes Fräsen sein (CNC-Fräsen), es können jedoch auch beliebige andere abtragende Verfahren genommen werden. Bei einem abtragenden Fertigungsverfahren könnte das Positionierungstray z. B. aus einem Keramikrohling hergestellt werden. Keramik zeichnet sich durch gute biologische Eigenschaften verbunden mit einer großen Härte aus, was für eine Verwendung im Mundinnenraum von Vorteil ist.

Ein Vorteil der einzeitigen Herstellung von Brackets und Positionierungshilfe als einstückiges Positionierungstray im Positivverfahren durch generative oder abtragende Fertigungstechniken begründet sich darin, dass ohne weitere Zwischenschritte Brackets und Positionierungshilfe einzeitig als Positionierungstray hergestellt wird, was die Zeit und den Aufwand für das Herstellen solcher Positionierungstrays und die intraorale Implementierung deutlich verkürzt. Dabei werden Fehlerquellen, Risiken beim Ablösen der im Negativverfahren hergestellten Übertragungstrays, wie bei dem indirekten Kleben, sowie aufwendiges Nacharbeiten im Mundraum reduziert. Der Vorteil davon, dass die Brackets einstückig mit den Positionierungshilfen verbunden sind liegt darin, dass die Struktur eines solchen Positionierungstrays einfacher ist. Anders gesagt müssen nicht - vergleichsweise zeitaufwendig - verschiedene Materialien verarbeitet und miteinander verbunden werden, sondern es reicht aus, wenn ein Material verwendet wird. Dies ist für den Patienten komfortabler. Es ist durchaus denkbar, dass der Mundinnenraum eines Patienten morgens gescannt wird und bereits am Nachmittag eine passende Zahnspange als Positionierungstray befestigt werden kann. Außerdem kann ein Kieferorthopäde, der feststellt, dass ein solches Positionierungstray fehlerhaft hergestellt wurde, vergleichsweise einfach "in office" durch Rapid Prototyping-Verfahren ein Ersatztray nach erneutem Scannen herstellen. Außerdem hat ein Kieferorthopäde nunmehr die Option, ohne industriell gefertigte Standardbrackets verwenden zu müssen oder diese durch aufwendige Verfahren zu individualisieren oder zur genaueren Platzierung mit aufwendigen Übertragungssystemen verbinden zu müssen, "in office" individuelle Brackets aus einer eigenen virtuellen Bracketbibliothek auszuwählen und entsprechend der Zahnoberfläche die Bracketbasis zu individualisieren. Er kann sie wie gewünscht gestalten und dann vor Ort in eigener Praxis herstellen. Dies erhöht die Genauigkeit beim Umsetzen individuell geplanter Behandlungsziele, die Flexibilität und auch die Effektivität beim Behandeln eines Patienten.
Es bestünde natürlich auch die Möglichkeit, z. B. über die Nutzung von Cloud-Anwendungen, sowohl Soft- als auch Hardware, von externen Anbietern bei diesem Verfahren nutzen zu können.

### Details:

Bei einer bevorzugten Ausführungsform kann in dem Positionierungstray an dem Übergang zwischen dem bzw. den Bracket/s und der zugehörigen Positionierungshilfe eine Stelle mit verringerter Bruchfestigkeit ausgebildet werden. Eine solche Stelle kann z. B. dadurch hergestellt werden, dass das Material an dieser Stelle eine verringerte Materialstärke hat oder dass dieses spröder ist.

Hierdurch wird das Abtrennen der Brackets von dem Positionierungstray erleichtert, was es einfacher macht, diese bei einem Patienten abzunehmen. Dies liegt daran, dass keine besonderen Werkzeuge benötigt werden, um diesen von dem Rest des Positionierungstrays und insbesondere der Positionierungshilfe zu lösen.

Es wird weiterhin bevorzugt, dass bei einem generativen Fertigungsverfahren ein Kunststoff verwendet wird, der mit einem erhöhten Anteil von Keramikpartikeln vernetzt ist. Hierdurch kann ein Bracket mit einer hohen Festigkeit erzielt werden.

Solche Materialien sind als "Nano-Hybrid Filling Materials" bekannt.

Weiterhin wird bei einem abtragenden Verfahren bevorzugt, dass das Positionierungstray aus einem Keramik- oder Kunststoffrohling hergestellt wird. Vor allem Keramikrohlinge zeichnen sich durch eine hohe Härte aus, was dazu führt, dass diese zur Verwendung in einem Mundinnenraum gut geeignet sind und Kräfte nur mit geringen Verlusten auf die Zähne übertragen können. Dieses kann durch ein Fräsverfahren oder speziell durch ein CNC-Fräsverfahren, ähnlich der Cerec-Inlay, bzw. Veneer- oder Kronenherstellung hergestellt werden.

Des Weiteren ist eine Vorrichtung zur Herstellung eines Positionierungstrays nach Anspruch 5 eine Lösung der Erfindung. Die Beschreibung der Merkmale und Vorteile entspricht im Wesentlichen der Beschreibung, die weiter oben bezüglich Anspruchs 1 vorgenommen wurde.

Die Ausgangsdaten können hierbei mittels einer beliebigen Einrichtung erhalten werden, die in der Lage ist, den Mundinnenraum eines Patienten zu vermessen. Beispiele hierfür sind z. B. der iTero Scanner o. a.

Bei der Einrichtung zum Erhalten von Zieldaten und zum Berechnen der Traykonfigurationsdaten kann es sich um eine beliebige Einrichtung/ Software handeln, die für eine entsprechende Berechnung geeignet ist. Insbesondere kann es sich hierbei um einen Computer handeln, auf dem eine entsprechende Software (z.B. OnyxCeph) installiert ist. Was die abhängigen Ansprüche 6 bis 8 angeht, ist auf die Vorteile, die weiter oben bezüglich des Herstellungsverfahrens genannt wurden, zu verweisen.

Weiterhin besteht die vorliegende Erfindung aus dem computerlesbaren Speichermedium nach Anspruch 9. Dieses ist dadurch gekennzeichnet, dass es ein Computerprogramm enthält, das dazu ausgestattet ist, ein Verfahren nach einem der Ansprüche 1 bis 4 zu steuern.

Ein solches Computerprogramm kann aufgrund der Ausgangsdaten und der Zieldaten Befehle erzeugen, die von einer Vorrichtung, die für ein generatives Verfahren oder ein abtragendes Verfahren ausgestaltet ist, ausgeführt werden können. So könnte das Computerprogramm Steuerungsbefehle für einen 3D-Drucker oder eine CNC-Fräseinrichtung (oder allgemein für eine beliebige Einrichtung, die für ein generatives oder abtragendes Fertigungsverfahren ausgestaltet ist) erzeugen. Ein solches Speichermedium führt zu den Vorteilen, die weiter oben bezüglich des Herstellungsverfahrens genannt wurden.

Bei einem computerlesbaren Speichermedium kann es sich z. B. um eine Festplatte oder eine CD, jedoch auch um eine beliebige andere Speichereinrichtung handeln. Auch muss ein solches Speichermedium nicht vor Ort vorhanden sein. Es kann sich z. B. um einen Internetserver handeln, von dem ein entsprechendes Computerprogramm herunterladbar ist.

Die Aufgabe wird weiterhin durch ein Positionierungstray gelöst. Dieses weist eine Positionierungshilfe und ein oder mehrere zugehörige Bracket(s) auf, die mit der Positionierungshilfe körperlich zusammenhängend ausgebildet sind. Das Positionierungstray kann z. B. aus einem einzigen Keramik- oder Kunststoffrohling hergestellt sein und kann bevorzugt durch ein generatives oder abtragendes Verfahren hergestellt worden sein.

Ein solches Positionierungstray, einstückig bestehend aus Brackets und Positionierungshilfe, weist die bezüglich des Verfahrens beschriebenen Vorteile auf und ist, wenn es aus einem einzigen Material hergestellt ist, leichter herstellbar als ein Positionierungstray, das im Workflow aus verschiedenen, nacheinander ablaufenden Prozessen und Materialien entsteht bzw. besteht.

Eine bevorzugte Ausführungsform des Positionierungstrays kann auch eine Sollbruchstelle aufweisen, wie sie weiter oben bezüglich Anspruchs 2 beschrieben wurde und führt zu entsprechenden Vorteilen.

Das Positionierungstray kann durch ein Verfahren nach Anspruch 1 bis 4 oder durch eine Vorrichtung nach Anspruch 5 bis 8 hergestellt werden.

### Kurze Beschreibung der Zeichnungen

Fig. 1 zeigt schematisch ein Positionierungstray.
Fig. 2 zeigt schematisch ein erfindungsgemäßes Verfahren.
Fig. 3 zeigt eine Ansicht eines modellierten korrigierten Zahnbogens mit daran angebrachten Brackets und einem Idealbogen.
Fig. 4 ist eine Draufsicht auf die in Fig. 3 dargestellten Zähne mit angebrachten Brackets und Idealbogen.
Fig. 5 ist eine Vorderansicht eines Computermodells von unkorrigierten Zähnen mit darauf aufgesetzten Positionierungstrays und damit verbundenen Brackets.
Fig. 5a ist eine Draufsicht auf die Anordnung nach Fig. 5.
Fig. 6 ist eine Schnittansicht eines Zahns, der in Fig. 5 dargestellt ist.

### Detaillierte Beschreibung der Zeichnungen

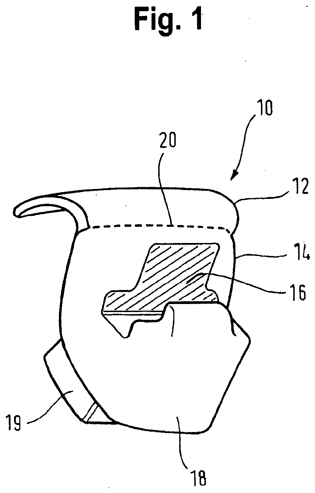

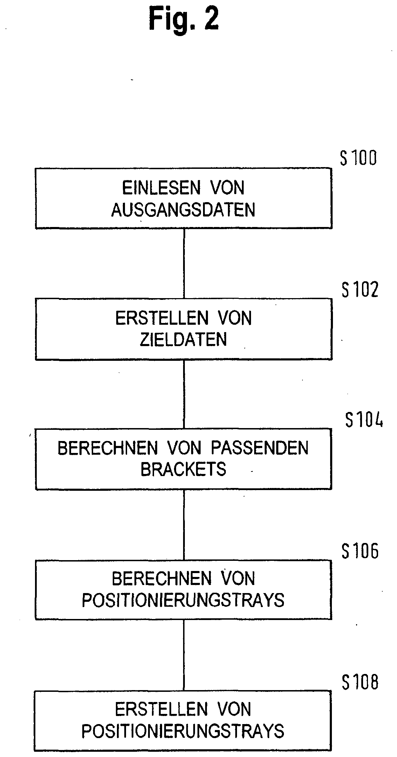

Im Folgenden wird eine Ausführungsform der Erfindung unter Bezugnahme auf Figuren 1 und 2 beschrieben. Fig. 2 zeigt ein Positionierungstray 10, das erst nach dem in Fig. 1 dargestellten Verfahren zur Positionierung der Brackets am idealen Zielmodell herstellbar ist. Dieses Positionierungstray 10 weist eine Positionierungshilfe 12 auf, die mit einem Bracket 14 verbunden ist. Dieses Bracket 14 kann an einem nicht dargestellten Zahn eines Patienten befestigt werden, indem es an der (nicht dargestellten) Rückseite mit einem Klebstoff versehen wird, der ausgehärtet wird, sobald das Bracket am Zahn des Patienten anliegt. Das Bracket 14 weist ein Schlitz 16 auf, in die ein Bogen eingesetzt werden kann. Sobald dieser Bogen eingesetzt wurde, kann dieser mittels eines Gummirings oder eines anderen Mittels an dem Bracket 14 befestigt werden. Ein entsprechender Gummiring (nicht dargestellt) wird über den Vorsprung gezogen, der durch die unterschiedliche Breite von Bracketbasis 18 und Bracketsockel 19 entsteht, so dass es den Bogen in der Nut 16 hält.

Des Weiteren kann zwischen der Positionierungshilfe 12 und dem Bracket 14 eine Sollbruchstelle 20 ausgebildet werden. Diese wird durch eine gezielte Schwächung des Materials an dieser Stelle ausgebildet, so dass die Positionierungshilfe 12 leicht von dem Bracket 14 abgebrochen werden kann, nachdem dieses Bracket 14 an dem Zahn eines Patienten befestigt wurde.

Fig. 2 zeigt schematisch ein Verfahren zur Herstellung eines solchen Bracket. Hierbei werden in Schritt S100 zunächst Ausgangsdaten eingelesen. Dieses Einlesen kann z. B. mittels einer Einrichtung geschehen, die den Mundraum eines Patienten scannt (Intraoralscanner).

Ausgehend davon werden Zieldaten erstellt (Schritt S102), die darstellen, wie das Gebiss bzw. der Kiefer des Patienten nach der Behandlung aussehen soll. Das heißt während die Ausgangsdaten den Ist-Zustand darstellen, stellen die Zieldaten den Soll-Zustand dar.

In Schritt S104 wird dann zunächst ein passender Idealbogen aus der virtuellen Bogenbibliothek ausgewählt, der dem Verlauf des durch den Kieferorthopäden mit Hilfe der Software erstellten Soll-Zustandes des Zahnbogens und weiterer spezifischer Kriterien (Mindestabstand zu Zahnoberflächen etc.) am nächsten entspricht. Erst danach werden passende Brackets bestimmt bzw. berechnet. Unter dem Berechnen von "passenden Brackets" wird verstanden, dass die Bracketpositionen ermittelt werden, die in der Lage sind, den bereits ausgesuchten Idealbogen in ihren Bracketschlitzen passiv aufzunehmen. So können später, nach mehreren aufeinanderfolgenden Bogenwechseln, die Zähne des Patienten von der Ist-Konfiguration in die Soll-Konfiguration überführt werden. Anders gesagt handelt es sich bei dem Berechnen der passenden Brackets um einen Teil derjenigen Planung, die der Kieferorthopäde erst nach der Idealbogenermittlung durchführt, wo er mit Hilfe der Software die genaue Position der Brackets in Bezug zum ausgewählten Idealbogen (Ausrichtung des Bracketschlitzes) und zu den Zähnen (Höhe und Neigung des Bracketsockels) ermittelt

Sobald diese Brackets passend bestimmt bzw. berechnet wurden, werden nach Rückführung der Zähne inklusive der nun auf den Zähnen entsprechend positionierten Brackets, mittels Software, entsprechende Postionierungstrays berechnet. Das heißt es wird eine Positionierungshilfe bestimmt, die mit den Brackets verbunden ist und die so ausgestaltet ist, dass sie eine sichere Retention des Positionierungstrays am Zahnbogen gewährleisten kann, indem sie über Okklusalflächen bzw. Inzisalkanten einzelner Zähne virtuell modelliert wird. Ausgehend von diesen berechneten Positionierungstrays, das heißt ausgehend von den berechneten dreidimensionalen Konfigurationsdaten, werden entsprechende Postionierungstrays z. B. mittels eines 3D-Druckers hergestellt.

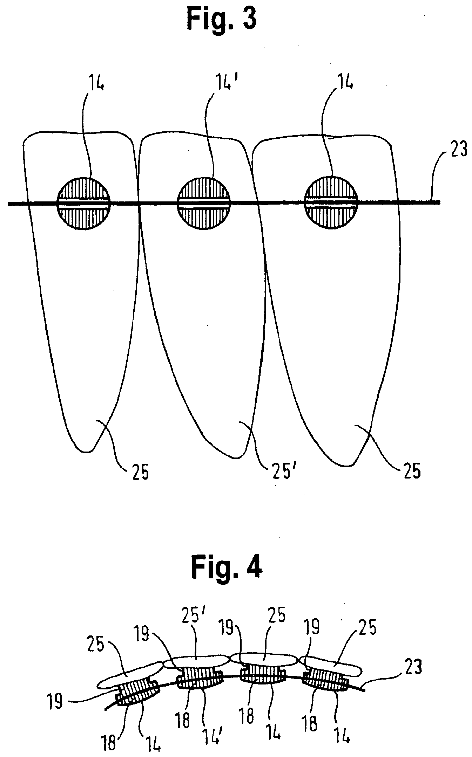

Das in Fig. 2 schematisch und kurz dargestellte Verfahren wird nun ein weiteres Mal im Detail unter Bezugnahme auf Figuren 3 bis 6 beschrieben.

Fig. 3 zeigt eine modellierte Anordnung von Brackets 14, 14' an der Lingualseite der Zähne 25, 25'. Diese Brackets 14, 14' sind an der Innenseite der Zähne 25 (d. h. an derjenigen Seite, die der Zunge zugewandt ist) befestigt und durch einen Idealbogen 23 verbunden. Diese Gestaltung ist die nach der Zahnfehlstellungskorrektur zu erzielende Konfiguration der Zähne 25, 25' und der Brackets 14, 14' und wird nach dem dritten virtuellen Planungsschritt, wie er in der vorliegenden Anmeldung beschrieben wird, erhalten.

Fig. 4 zeigt eine entsprechende Draufsicht auf diese Konfiguration, aus der weitere Details ersichtlich sind. Auch hier sind Zähne 25, 25' gezeigt, die durch den virtuellen Idealbogen 23 verbunden werden. Bei dieser Draufsicht, die man auch als eine Sicht entlang der Inzisalrichtung in Richtung zu den Zähnen 25, 25' bezeichnen kann, werden Brackets 14, 14' gezeigt, die über eine Bracketbasis bzw. Bracketsockel mit den Zähnen 25, 25' verbunden sind.

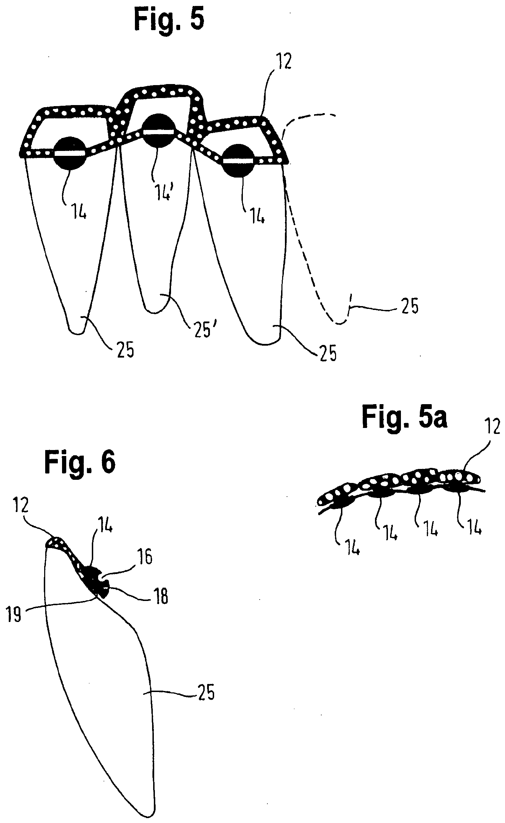

Der vierte virtuelle Planungsschritt wird nun unter Bezugnahme auf Fig. 5 beschrieben, die insbesondere in der Zusammenschau mit Fig. 3 verständlich ist. In dieser Zeichnung werden die Brackets 14, 14', die wiederum an den Zähnen 25, 25' befestigt sind, zusammen mit der daran befestigten Positionierungshilfe 12 gezeigt. Hierbei zeigt diese Figur die modellierte Anordnung der Brackets 14, 14' zusammen mit der daran befestigten Positionierungshilfe 12 in einem Zustand, der dem unkorrigierten Zustand der Zähne 25, 25' entspricht. Diese Anordnung wird durch eine Transformation der Zähne 25, 25' von dem Sollzustand in den Istzustand und der damit einhergehenden Transformation der mit diesen verbundenen Brackets 14, 14' in diesen Istzustand berechnet. Anders gesagt werden in dem Computermodell die Brackets 14, 14' an den Zähnen 25, 25' passend angebracht, die Zähne 25, 25' werden dann so gedreht und verschoben, dass sie in den Istzustand (der die zu korrigierende Fehlstellung enthält) überführt werden, und die Brackets 14, 14' werden mit den Zähnen 25, 25' mitbewegt und mitgedreht. In diesem Zustand wird dann eine Positionierungshilfe 12 bestimmt, welche die Brackets 14, 14' an dieser derartig bestimmten Position halten kann.

Diese Positionierungshilfe 12, welche die Brackets 14 hält, ist einstückig mit den Brackets 14 ausgebildet. Die Positionierungshilfe 12 wird so geplant, dass die Brackets 14 durch diese an derjenigen Position relativ zu dem Zahn, an dem sie anzubringen sind, angebracht werden, so dass durch diese die Zähne 25 in die in Fig. 3 gezeigte Konfiguration überführbar sind (wie dies in anderen Worten weiter oben beschrieben wurde). So müsste z.B. in der in Fig. 5 gezeigten Darstellung der Zahn 25' bezüglich der rechts und links von diesem befindlichen Zähne 25 nach unten bewegt werden, damit dieser die in Fig. 3 gezeigte Konfiguration erhält. Damit das an diesem zu befestigende Bracket 14 die richtige Position relativ zu diesem Zahn 25' erhält, muss dieses in dem Positionierungstray 10 "weiter oben" positioniert sein, als die benachbarten Brackets 14, weshalb der Positionierungstray 10 in der Mitte nach oben versetzt ist, wie dies in Fig. 5 gezeigt ist. Zum erleichterten Verständnis, und um die Positionierungshilfe 12 leichter von den Brackets 14/ 14' unterscheiden zu können, ist die Positionierungshilfe 12 schwarz-weiß gemustert dargestellt, während die Brackets 14/ 14' durchgehend schwarz dargestellt sind.

Eine Detailansicht, nämlich eine Draufsicht auf die in Fig. 5 gezeigte Konfiguration, ist in Fig. 5a gezeigt. Hier sind die Positionierungshilfen 12 gezeigt, die mit Brackets 14 verbunden sind. Die Bracketsockel 19 und die Bracketkörper 18 sind ersichtlich.

Eine Längs-Schnittansicht eines einzelnen Zahns, der in Fig. 5 gezeigt ist, ist in Fig. 6 gezeigt. Auch hier ist eine Positionierungshilfe 12 als schwarz mit weißen Punkten dargestellt, die sich über die Schneidekante des Zahns 25 erstreckt. Ein Bracket 14 mit einem Bracketschnitt 16 ist über den Bracketsockel 19 mit dem Zahn 25 verbunden, der die Bracketbasis 18 direkt mit dem Zahn 25 verbindet. Hierbei dient ein "Vorsprung" zwischen der Bracketbasis 18 und dem Bracketsockel 19 zur Aufnahme von Gummiligaturen zum Einbinden des Idealbogens. Es wird hierbei bevorzugt, dass das Material der Positionierungshilfe aus einem preisgünstigeren Material als das Bracketmaterial ausgewählt ist. Hierdurch können Kosten reduziert werden. Allgemein können sich die Materialien der Positionierungshilfe 12 und der Brackets 14/14' unterscheiden, wobei z.B. die Bracket(s) 14/14' aus einem im Mundraum beständigeren Material als die Positionierungshilfe 12 hergestellt werden kann. Dies führt zu einer Kostenersparnis, da ein solches beständigeres Material i.A. teurer und schwieriger zu bearbeiten als ein entsprechendes weniger beständiges Material ist.

## Patentansprüche

1. Verfahren zur Herstellung eines Positionierungstrays (10) für Brackets von Zahnspangen, wobei das Positionierungstray eine Positionierungshilfe (12) und mehrere zugehörige Brackets (14) aufweist, wobei die Positionierungshilfe (12) einstückig mit den zugehörigen Brackets (14) ausgebildet wird, mit folgenden Schritten:
- Erhalten von Ausgangsdaten, welche die gegenwärtige Geometrie eines oder mehrerer Zähne zumindest eines Kiefers eines Patienten beschreiben,
- Erhalten von Zieldaten, welche die nach einer Zahnspangenbehandlung zu erzielende Geometrie des einen oder der mehreren Zähne des zumindest einen Kiefers des Patienten beschreiben,
- Berechnen von Traykonfigurationsdaten, welche die Geometrie von Brackets (14) in Bezug auf die gegenwärtige Geometrie des einen oder der mehreren Zähne des zumindest einen Kiefers des Patienten und der Positionierungshilfe (12) beschreiben, ausgehend von den Ausgangsdaten und den Zieldaten,
wobei die Berechnung der Traykonfigurationsdaten so erfolgt, dass mit den derartig beschriebenen Brackets (14) die Positionierungshilfe (12) so verbunden ist, dass sie verwendet werden kann, um die Brackets (14) so bezüglich der Zähne des Patienten zu positionieren, dass die Brackets (14) mit der Oberfläche der Zähne des Patienten verbunden werden kann/können und dass zusammen mit einem mit den Brackets zu verbindenden Bogen eine Korrektur einer Zahnfehlstellung durchgeführt werden kann,
**gekennzeichnet durch**
- Herstellen, auf der Grundlage der Traykonfigurationsdaten, eines entsprechenden Positionierungstrays (10) durch ein generatives Fertigungsverfahren, bevorzugt ein 3D-Druckverfahren, oder ein abtragendes Fertigungsverfahren.

2. Verfahren nach Anspruch 1, wobei das Verfahren so ausgestaltet ist, dass in dem Positionierungstray (10) an dem Übergang zwischen den Brackets und der zugehörigen Positionierungshilfe eine Stelle mit verringerter Bruchfestigkeit (20) ausgebildet ist, die als Sollbruchstelle dient, um ein Trennen der Brackets (14) von der Positionierungshilfe (12) zu erleichtern.

3. Verfahren nach einem der vorhergehenden Ansprüche, bei dem zur Herstellung der Positionierungstrays (10) zumindest für denjenigen Teil, der die Brackets (14) bildet, ein generatives Fertigungsverfahren verwendet wird, das einen Kunststoff verwendet, der mit Keramikpartikeln vermischt ist und der bevorzugt Beimengungen enthält, die die Ansprüche an die Festigkeit und Mundbeständigkeit des Brackets (14) erfüllen.

4. Verfahren nach einem der Ansprüche 1-2, bei dem zur Herstellung der Positionierungstrays (10) die Positionierungstrays aus einem Keramik- oder Kunststoffrohling durch ein abtragendes Verfahren hergestellt werden.

5. Vorrichtung zum Herstellen eines Positionierungstrays (10) für Brackets von Zahnspangen, wobei der Positionierungstray (10) eine Positionierungshilfe (12) und mehrere zugehörige Brackets (14) aufweisen, wobei die Positionierungshilfe (12) einstückig mit den zugehörigen Brackets (14) ausgebildet wird, mit:
- einer Einrichtung zum Erhalten von Ausgangsdaten, welche die gegenwärtige Geometrie eines oder mehrerer Zähne zumindest eines Kiefers eines Patienten beschreiben, insbesondere einer Einrichtung, die dafür ausgestattet ist, einen Mundinnenraum eines Patienten zu erfassen,
- einer Einrichtung zum Erhalten von Zieldaten, welche die nach einer Zahnspangenbehandlung zu erzielende Geometrie des einen oder der mehreren Zähne des zumindest einen Kiefers des Patienten beschreiben und die die Positionierung der Brackets entsprechend des Verlaufs eines durch die Einrichtung verfügbaren und vorher ermittelten Idealbogens erlaubt,
- einer Einrichtung zum Berechnen von Traykonfigurationsdaten, welche die Geometrie von Brackets (14) in Bezug auf die gegenwärtige Geometrie des einen oder der mehreren Zähne des zumindest einen Kiefers des Patienten und der Positionierungshilfe beschreiben, ausgehend von den Ausgangsdaten und den Zieldaten,
wobei die Berechnung der Traykonfigurationsdaten so erfolgt, dass mit den derartig beschriebenen Brackets (14) die Positionierungshilfe (12) so verbunden ist, dass sie verwendet werden kann, um die Brackets (14) so bezüglich der Zähne des Patienten zu positionieren, dass die Brackets (14) mit der Oberfläche der Zähne des Patienten verbunden werden können und dass zusammen mit einem mit den Brackets (14) zu verbindenden und vorher mit Hilfe der Einrichtung am Zielmodell ausgewähltem Idealbogen eine Korrektur einer Zahnfehlstellung durchgeführt werden kann, und
**gekennzeichnet durch**
- einer Einrichtung zum Herstellen, auf der Grundlage der Traykonfigurationsdaten, eines entsprechenden Positionierungstrays durch ein generatives Fertigungsverfahren, bevorzugt ein 3D-Druckverfahren, oder ein abtragendes Fertigungsverfahren.

6. Vorrichtung nach Anspruch 5, die dafür ausgestaltet ist, dass in den Positionierungstrays (10) an dem Übergang zwischen den Brackets (14) und der zugehörigen Positionierungshilfe (12) eine Stelle mit verringerter Bruchfestigkeit (20), insbesondere eine Stelle mit geschwächter Materialdicke, ausgebildet ist, die als Sollbruchstelle dient, um ein Trennen der Brackets (14) von der Positionierungshilfe (12) zu erleichtern.

7. Vorrichtung nach Anspruch 5 oder 6, die dafür ausgestaltet ist, zur Herstellung der Positionierungstrays (10) zumindest für denjenigen Teil, der die Brackets (14) bildet, ein generatives Fertigungsverfahren zu verwenden, das einen Kunststoff verwendet, der mit Keramikpartikeln vermischt ist und der bevorzugt Beimengungen enthält, die die Ansprüche an die Festigkeit und Mundbeständigkeit des Brackets (14) erfüllen.

8. Vorrichtung nach einem der Ansprüche 5-6, bei der die Einrichtung zum Herstellen, auf der Grundlage der Traykonfigurationsdaten, eines entsprechenden Positionierungstrays eine Einrichtung ist, die ein abtragendes Fertigungsverfahren durchführen kann.

9. Computerlesbares Speichermedium, das ein Computerprogramm enthält, das ein Verfahren nach einem der Ansprüche 1-4 steuern kann.

## Claims

1. Method of producing a positioning tray (10) for brackets of dental braces, the positioning tray having a positioning aid (12) and a plurality of associated brackets (14) and the positioning aid (12) being formed in one piece with the associated brackets (14), the method having the following steps:
- receiving of initial data which defines the present geometry of one or more teeth in at least one jawbone of a patient,
- receiving of target data which defines that geometry of the one or more teeth in the at least one jawbone of the patient which is to be achieved following treatment by dental brace,
- calculating of tray configuration data which, on the basis of the initial data and the target data, defines the geometry of brackets (14) relative to the present geometry of the one or more teeth in the at least one jawbone of the patient and relative to that of the positioning aid (12),
the calculating of the tray configuration data being performed in such a way that the positioning aid (12) is connected to the brackets (14) so defined in such a way that it can be used to so position the brackets (14) relative to the patient's teeth that the brackets (14) can be connected to the surface of the patient's teeth, and to so position them that, in association with an archwire for connection to the brackets, a correction can be made to tooth mispositioning,
**characterised by**
- production, on the basis of the tray configuration data, of a corresponding positioning tray (10) by a generative method of production and preferably a method of 3D printing, or by an ablative method of production.

2. Method according to claim 1, wherein the method is so designed that there is formed in the positioning tray (10), at the transition between the brackets and the associated positioning aid, a point of reduced fracture resistance (20) which acts as an intended breaking point to facilitate separation of the brackets (14) from the positioning aid (12).

3. Method according to either of the preceding claims, wherein what is used to produce the positioning trays (10) or at least that part thereof which forms the brackets (14), is a generative method of production employing a plastics material which is mixed with ceramic particles and which preferably contains admixtures which meet the demands for strength and resistance to the oral environment made on the bracket (14).

4. Method according to either of claims 1 and 2, wherein, to produce the positioning tray (10), the positioning tray is produced from a ceramic blank or a blank of plastics material by an ablative method.

5. Apparatus for producing a positioning tray (10) for brackets of dental braces, the positioning tray (10) having a positioning aid (12) and a plurality of associated brackets (14) and the positioning aid (12) being formed in one piece with the associated brackets (14), having:
- a means of receiving initial data which defines the present geometry of one or more teeth in at least one jawbone of a patient, and in particular a means which is equipped to sense the oral cavity of a patient,
- a means of receiving target data, which data defines that geometry of the one or more teeth in the at least one jawbone of the patient which is to be achieved following treatment by dental brace, and which data allows the bracket to be positioned in accordance with the configuration of a previously determined ideal archwire which is made available by the means,
- a means of calculating tray configuration data, which data, on the basis of the initial data and the target data, defines the geometry of brackets (14) relative to the present geometry of the one or more teeth in the at least one jawbone of the patient and relative to that of the positioning aid (12)
the calculating of the tray configuration data being performed in such a way that the positioning aid (12) is connected to the brackets (14) so defined in such a way that it can be used to so position the brackets (14) relative to the patient's teeth that the brackets (14) can be connected to the surface of the patient's teeth and to so position them that, in association with an ideal archwire for connection to the brackets which has been selected beforehand on a target model with the help of the means, a correction can be made to tooth mispositioning, and **characterised by**
- a means of producing, on the basis of the tray configuration data, a corresponding positioning tray (10) by a generative method of production and preferably a method of 3D printing, or by an ablative method of production.

6. Apparatus according to claim 5, which is so designed that there is formed in the positioning tray (10), at the transition between the brackets (14) and the associated positioning aid (12), a point of reduced fracture resistance (20), and in particular a point where the thickness of material is decreased, which acts as an intended breaking point to facilitate separation of the brackets (14) from the positioning aid (12).

7. Apparatus according to claim 5 or 6, which is so designed as to use, to produce the positioning trays (10) or at least that part thereof which forms the brackets (14), a generative method of production employing a plastics material which is mixed with ceramic particles and which preferably contains admixtures which meet the demands for strength and resistance to the oral environment made on the bracket (14).

8. Apparatus according to either of claims 5 and 6, wherein the means of producing, on the basis of the tray configuration data, a corresponding positioning tray is a means which is able to carry out an ablative method of production.

9. Computer-readable storage medium containing a computer program able to control a method according to one of claims 1-4.

## Revendications

1. Procédé de fabrication d'une gouttière de positionnement (10) pour des boîtiers de bagues dentaires, dans lequel la gouttière de positionnement comporte un accessoire de positionnement (12) et plusieurs boîtiers (14) associés, dans lequel l'accessoire de positionnement (12) est réalisé d'une seule pièce avec les boîtiers (14) associés, avec les étapes suivantes :
- obtention de données initiales qui décrivent la géométrie présente d'une ou plusieurs dents d'au moins une mâchoire d'un patient,
- obtention de données ciblées qui décrivent la géométrie, à atteindre après un traitement par bagues dentaires, d'une ou des plusieurs dents de l'au moins une mâchoire du patient,
- calcul de données de configuration de gouttière qui décrivent la géométrie de boîtiers (14) par rapport à la géométrie présente de l'une ou des plusieurs dents de l'au moins une mâchoire du patient et de l'accessoire de positionnement (12), à partir des données initiales et des données ciblées,
dans lequel le calcul des données de configuration de gouttière s'effectue de telle sorte que l'accessoire de positionnement (12) est relié de telle manière aux boîtiers (14) ainsi décrits qu'il peut être utilisé pour positionner les boîtiers (14) de telle manière par rapport aux dents du patient que les boîtiers (14) peuvent être reliés à la surface des dents du patient et que, conjointement avec un arc à relier aux boîtiers, une correction d'une mauvaise position des dents peut être effectuée,
**caractérisé par**
- la fabrication, sur la base des données de configuration de gouttière, d'une gouttière de positionnement (10) correspondante par un procédé de fabrication par création, de préférence un procédé d'impression 3D, ou par un procédé de fabrication par enlèvement de matière.

2. Procédé selon la revendication 1, dans lequel le procédé est conçu de telle sorte que, dans la gouttière de positionnement (10), un point (20) avec résistance réduite à la rupture est réalisé au niveau de la transition entre les boîtiers et l'accessoire de positionnement associé, lequel point sert de point destiné à la rupture pour que les boîtiers (14) puissent être plus facilement séparés de l'accessoire de positionnement (12).

3. Procédé selon l'une quelconque des revendications précédentes, dans lequel, afin de fabriquer la gouttière de positionnement (10), au moins pour la partie qui forme les boîtiers (14), un procédé de fabrication générateur est utilisé qui utilise une matière plastique qui est mélangée à des particules de céramique et qui contient de préférence des additifs qui satisfont aux exigences de solidité et de résistance au milieu buccal du boîtier (14).

4. Procédé selon l'une quelconque des revendications 1 à 2, dans lequel, afin de fabriquer la gouttière de positionnement (10), les gouttières de positionnement sont fabriquées à partir d'une pièce brute en céramique ou en plastique avec un procédé d'enlèvement de matière.

5. Dispositif de fabrication d'une gouttière de positionnement (10) pour des boîtiers de bagues dentaires, dans lequel la gouttière de positionnement (10) comporte un accessoire de positionnement (12) et plusieurs boîtiers (14) associés, dans lequel l'accessoire de positionnement (12) est réalisé d'une seule pièce avec les boîtiers (14) associés, avec :
- un dispositif destiné à obtenir des données initiales qui décrivent la géométrie présente d'une ou plusieurs dents d'au moins une mâchoire d'un patient, en particulier un dispositif qui est équipé pour détecter un espace intérieur buccal d'un patient,
- un dispositif pour obtenir des données ciblées qui décrivent la géométrie, à atteindre après un traitement par bagues dentaires, d'une ou des plusieurs dents de l'au moins une mâchoire du patient et qui permet le positionnement des boîtiers en fonction de l'allure d'un arc idéal disponible grâce au dispositif et déterminé préalablement,
- un dispositif pour calculer des données de configuration de gouttière qui décrivent la géométrie de boîtiers (14) par rapport à la géométrie présente d'une ou des plusieurs dents de l'au moins une mâchoire du patient et de l'accessoire de positionnement, à partir des données initiales et des données ciblées,
dans lequel le calcul des données de configuration de gouttière s'effectue de telle sorte que l'accessoire de positionnement (12) est relié de telle manière aux boîtiers (14) ainsi décrits qu'il peut être utilisé pour positionner les boîtiers (14) de telle manière par rapport aux dents du patient que les boîtiers (14) peuvent être reliés à la surface des dents du patient et que, conjointement avec un arc idéal à relier aux boîtiers (14) et choisi préalablement à l'aide du dispositif au niveau du modèle ciblé, une correction d'une mauvaise position des dents peut être effectuée, et
**caractérisé par**
- un dispositif pour fabriquer, sur la base des données de configuration de gouttière, une gouttière de positionnement correspondante par un procédé de fabrication par création, de préférence un procédé d'impression 3D, ou par un procédé de fabrication par enlèvement de matière.

6. Dispositif selon la revendication 5, qui est conçu pour réaliser dans la gouttière de positionnement (10) un point (20) avec résistance réduite à la rupture au niveau de la transition entre les boîtiers (14) et l'accessoire de positionnement (12) associé, en particulier un point avec une plus petite épaisseur de matière, lequel point sert de point destiné à la rupture pour que les boîtiers (14) puissent être plus facilement séparés de l'accessoire de positionnement (12).

7. Dispositif selon la revendication 5 ou 6, qui est conçu pour, afin de fabriquer la gouttière de positionnement (10), au moins pour la partie qui forme les boîtiers (14), utiliser un procédé de fabrication générateur qui utilise une matière plastique qui est mélangée à des particules de céramique et qui contient de préférence des additifs qui satisfont aux exigences de solidité et de résistance au milieu buccal du boîtier (14).

8. Dispositif selon l'une quelconque des revendications 5 à 6, dans lequel le dispositif destiné à la fabrication d'une gouttière de positionnement correspondante sur la base des données de configuration de gouttière est un dispositif qui peut mettre en oeuvre un procédé de fabrication par enlèvement de matière.

9. Moyen de stockage en mémoire lisible par ordinateur qui contient un programme informatique qui peut commander un procédé selon l'une quelconque des revendications 1 à 4.
